# FASCICULE DE BREVET EUROPEEN

(11) **EP 2 899 146 B1**
(45) Date de publication et mention de la délivrance du brevet: **13.11.2019**
(21) Numéro de dépôt: 14198259.5
(22) Date de dépôt: 16.12.2014
(51) Int. Cl.: B65G 37/02, B65G 47/51

(54) **Procédé et installation de gestion d'un flux d'articles au niveau d'une zone tampon**
Verfahren und Anlage zur Steuerung eines Artikelflusses in einem Pufferbereich
Method and facility for managing a stream of articles in a buffer zone

(30) Priorité: 16.12.2013 FR 1362693
(43) Date de publication de la demande: 29.07.2015
(73) Titulaire: FIVES CINETIC, 70400 Hericourt (FR)
(72) Inventeur: Abry, Christophe, 70400 HERICOURT (FR)
(74) Mandataire: Lavoix

(56) Documents cités:
- EP-A1- 2 110 345
- EP-A2- 1 323 651
- DE-A1-102008 024 407
- DE-U1-202009 006 536
- US-A1- 2010 070 066
- US-A1- 2011 239 838
- US-A1- 2013 202 394

## Description

La présente invention concerne le domaine de la gestion de flux d'articles au niveau d'une zone de stockage tampon définie entre deux postes de traitement de ces articles. Par exemple, le poste de traitement placé en amont du dispositif selon l'invention peut être un poste de fabrication et le poste situé en aval du dispositif selon l'invention peut être destiné au conditionnement des produits avant leur expédition.

L'invention est particulièrement adaptée pour traiter des produits plats, par exemple des panneaux, des plaques, des matelas, car elle permet un stockage vertical de ces articles dans la zone tampon. Elle trouve une application particulièrement appropriée dans le cadre de pièces entrant dans la composition de meubles, notamment des éléments de cuisine.

Dans l'industrie du panneau de bois, il est important dans un souci de réduction des coûts d'optimiser les découpes des panneaux. Un fabricant s'attachera donc d'une part à éviter la perte de matière avec des chutes inexploitables et d'autre part à limiter la manutention des panneaux entre plusieurs commandes. Le plus souvent un opérateur d'une usine de fabrication de panneau de bois utilisera la quasi totalité d'un panneau en lançant la découpe de plusieurs articles destinés à plusieurs commandes de clients.

Les commandes clients peuvent aussi comporter des couleurs et des décorations différentes qui nécessitent la découpe de panneaux esthétiquement différents. Le résultat est un grand nombre d'articles de tailles, de formes et de couleurs différentes à adresser à plusieurs zones de traitements ou directement à plusieurs clients. Chaque article pourrait être unique.

La gestion et le tri de ces articles est problématique en bout de chaine lorsque la chaîne de production doit fonctionner à une cadence soutenue de manière continue ou discontinue.

On connaît des installations permettant une gestion des articles dans une zone tampon comportant des moyens pour prélever des articles défilant sur des convoyeurs et pour empiler ces articles, directement les uns sur les autres, ceci dans l'attente de prélever les articles de cet empilement pour les déposer sur d'autres convoyeurs.

De telles installations sont adaptées dans le cadre de la gestion d'articles identiques et fabriqués en série. Cependant, ces installations ne permettent aucunement la gestion de pièces de formes différentes qui, lorsqu'elles sont empilées, constituent un empilement particulièrement instable, ce qui peut aussi entrainer des dégradations de produits. C'est le cas notamment des articles entrant dans la composition d'un meuble.

Il est également connu des systèmes stockant des articles de formats différents sur des palettes en attendant que la production de la commande soit réalisée dans son ensemble. Les articles sont empilés suivant leur taille sur les palettes au fur et à mesure de leur production par des robots de manutention.

Etant donné que la taille des articles ne dépend pas de l'ordre de production mais de l'optimisation de la découpe du panneau, il est courant d'utiliser plusieurs palettes intermédiaires pour stocker une même commande. Cette méthode nécessite beaucoup de place au sol, implique beaucoup de manutention et n'est pas adaptée aux grandes productions qui ont souvent de longues files d'attente en vue de la production complète des commandes. De nombreuses commandes sont traitées en parallèle sur différentes unités de découpe. Pour pallier le problème de l'ordonnancement des articles à produire, on utilise également des caisses mobiles de stockage dans lesquelles les articles sont positionnés à la verticale. Chaque caisse de stockage est destinée à accueillir toutes les articles d'une commande finale.

Une telle caisse de stockage est remplie au fur et à mesure de la production des articles quelle que soit leur taille. Une fois la commande produite, la caisse de stockage est déplacée vers une zone de finition ou de conditionnement. Les articles sont alors extraits de la caisse mobile pour être traités (peinture, finition...) ou pour être palettisés dans un ordre et une position compatible avec leur prochaine expédition ou leur assemblage. Une fois vide, la caisse de stockage retourne dans la zone de chargement des articles.

On rencontre ici des problèmes d'occupation de l'espace disponible, car chaque caisse de stockage a une taille déterminée. Elle prend autant de place qu'elle soit vide ou pleine. Cet espace n'est pas mutualisé entre toutes les commandes. Les zones de stockage doivent être surdimensionnées pour éviter les engorgements lors de périodes de forte activité. Cette solution oblige également à gérer le retour et la mise à disposition des caisses de stockage en réalisant des circuits de retour et de distribution, ce qui complique le système.

Dans le domaine du stockage, on connait la solution qui consiste à utiliser un stock tampon pour entreposer les articles pendant la production. Ce stock est alimenté par des manipulateurs, ou par des robots de manutention eux même alimentés par des convoyeurs transportant en flux continu les articles produits.

L'inconvénient majeur de cette solution est que ce sont les mêmes robots de manutention qui sont utilisés pour l'entrée et la sortie de stock. Il est donc difficile d'avoir une production continue avec cette solution.

On connaît encore des installations encombrantes telles que celle décrite dans EP 1 323 651, qui divulgue une installation selon le préambule de la revendication 1, dans laquelle des articles tels que des plaques de verre sont transportés et triés, avec un rack de stockage temporaire alimenté en entrée par une desserte mobile le reliant à un convoyeur en entrée, et qui délivre les plaques de verre par une autre desserte mobile vers un convoyeur en sortie. Le document divulgue aussi un procédé selon le préambule de la revendication 6.

La présente invention vise donc notamment à pallier les inconvénients précités, en proposant une installation et un procédé permettant d'améliorer la régulation des flux de production en bout de chaine, spécialement dans l'industrie du bois et de leurs dérivés.

Ainsi, l'invention a pour objet, selon un premier aspect, une installation de gestion d'un flux d'articles, notamment dans une chaine de fabrication d'articles, comprenant un ensemble de convoyage, un espace de stockage temporaire des articles, et des moyens de manutention aptes à placer un article sur, ou à retirer un article de, l'ensemble de convoyage et l'espace de stockage temporaire, selon la revendication 1.

L'ensemble de convoyage comprend au moins un convoyeur en entrée et au moins un convoyeur en sortie.

L'espace de stockage temporaire est traversant avec un côté en entrée et un côté en sortie, cet espace de stockage temporaire étant disposé de sorte que le côté en entrée soit orienté vers le convoyeur en entrée et le côté en sortie soit orienté vers le convoyeur en sortie.

Les moyens de manutention sont disposés de part et d'autre de l'espace de stockage temporaire, en sorte de permettre le stockage temporaire des articles en provenance du convoyeur en entrée par le côté en entrée puis leur déstockage vers le convoyeur en sortie par le côté en sortie.

L'espace de stockage temporaire dispose d'une pluralité d'emplacements de stockage, de préférence verticaux, aptes à recevoir, de préférence verticalement, les articles.

Les moyens de manutention comprennent au moins un bras de manutention en entrée disposé entre le convoyeur en entrée et l'espace de stockage temporaire et apte à retirer au moins un article du convoyeur en entrée et à le placer dans l'espace de stockage temporaire, et au moins un bras de manutention en sortie disposé entre l'espace de stockage temporaire et le convoyeur en sortie et apte à retirer au moins un article de l'espace de stockage temporaire et à le placer sur le convoyeur en sortie.

Suivant certains modes de réalisation, l'installation comprend en outre une ou plusieurs des caractéristiques suivantes, prise(s) isolément ou suivant toutes les combinaisons techniquement possibles :
- les moyens de manutention comprennent au moins deux bras de manutention en entrée et/ou au moins deux bras de manutention en sortie,
- l'ensemble de convoyage comprend au moins deux convoyeurs en entrée et en ce que chaque bras de manutention en entrée est alimenté par un convoyeur en entrée dédié, en sorte de permettre d'abaisser les délais de traitement des articles,
- l'ensemble de convoyage comprend au moins deux convoyeurs en sortie, et chaque bras de manutention en sortie alimente un convoyeur en sortie dédié, en sorte de permettre de paralléliser la sortie de plusieurs articles,
- les moyens de manutention sont motorisés pour leur déplacement, en sorte de faciliter l'accès plus étendu à l'espace de stockage temporaire.

L'invention a également pour objet, selon un deuxième aspect, un procédé de gestion d'un flux d'articles dans une installation, notamment dans une chaine de fabrication d'articles, selon la revendication 6.

Le procédé comprend les étapes suivantes :
- convoyage du flux continu d'articles sur au moins un convoyeur en entrée,
- retrait des articles du ou des convoyeurs en entrée et placement de ces articles dans un espace de stockage temporaire traversant présentant un côté en entrée et un côté en sortie, par son côté en entrée, par l'intermédiaire de moyens de manutention,
- retrait asynchrone des articles de l'espace de stockage temporaire traversant par son côté en sortie, et placement de ces articles sur au moins un convoyeur en sortie, par l'intermédiaire des moyens de manutention.

Le retrait des articles du ou des convoyeurs en entrée et le placement de ces articles dans l'espace de stockage temporaire traversant, se fait par pivotement de ces articles entre leur position sur le ou les convoyeurs en entrée et leur position dans l'espace de stockage temporaire.

Le retrait asynchrone des articles de l'espace de stockage temporaire traversant et le placement de ces articles sur le ou les convoyeurs en sortie, se fait par pivotement de ces articles entre leur position dans l'espace de stockage temporaire et leur position sur le ou les convoyeurs en sortie.

Le procédé et l'installation de l'invention permettent donc d'améliorer la régulation d'un flux de production, notamment en bout de chaîne, en assurant une bonne continuité de la production.

Les caractéristiques et avantages de l'invention apparaitront à la lecture de la description qui va suivre, donnée uniquement à titre d'exemple, et non limitative, en référence aux figures annexées suivantes :
- la figure 1 est une représentation schématique d'une installation avec un stock tampon, selon l'état technique,
- la figure 2 est une représentation schématique d'un exemple d'installation selon l'invention,
- la figure 3 est une représentation schématique d'un autre exemple d'installation selon l'invention,
- la figure 4 est une représentation schématique d'un détail de l'espace de stockage temporaire traversant dans une installation selon l'invention,
- la figure 5 est une représentation schématique d'un exemple de moyens de manutention d'un article en position horizontale, dans une installation selon l'invention,
- la figure 6 est une représentation schématique d'un exemple de moyens de manutention d'un article en position verticale, dans une installation selon l'invention,
- la figure 7 est une représentation schématique des moyens de manutentions des figures 5 et 6 en action dans la zone de stockage.

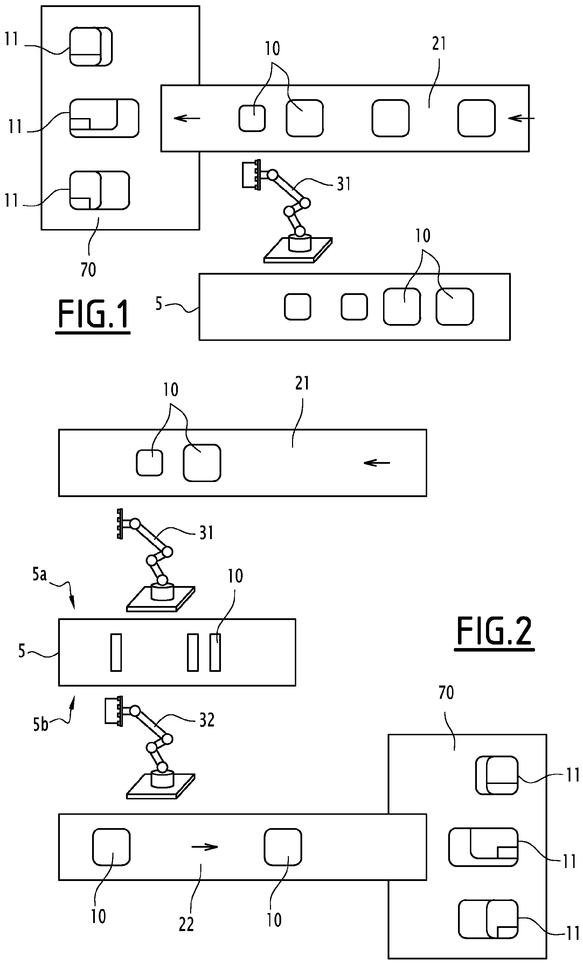

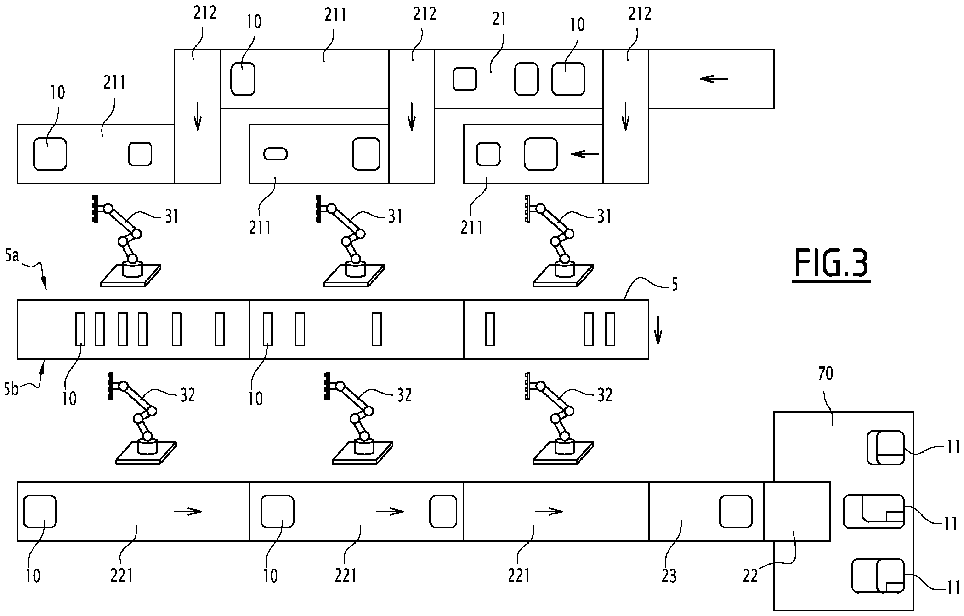

Par commodité de représentation, les figures 1, 2 et 3 sont des vues de dessus, mais les robots de manutention 31 de l'état de la technique (figure 1) et les moyens de manutention 31, 32 selon l'invention (figures 2 et 3) sont représentés en vue en élévation.

L'art antérieur, visible à la figure 1, montre une installation pour la gestion d'un flux d'articles 10, provenant d'une première unité de traitement, défilant sur un convoyeur 21 avec une zone tampon 5. Une deuxième unité de traitement, ici une unité d'empilage 70 est située au bout du convoyeur 21 dans le but de réunir les articles d'une même commande ou d'un même ensemble 11. Les articles 10 qui ne sont pas encore attendus par l'unité d'empilage 70 sont saisis par le robot de manutention 31 grâce à des ventouses puis positionnés dans le stock tampon 5 en fonction de leurs caractéristiques. Lorsqu'il devient possible pour l'unité d'empilage 70 de traiter les articles 10 mis en stock tampon 5, le robot de manutention 31 replace les articles 10 du stock tampon 5 sur le convoyeur 21. Cet art antérieur connait les désavantages décrits plus haut.

Tel que visible sur les figures 2 et 3 dans deux exemples de réalisation, l'invention concerne une installation pour la gestion d'un flux d'articles 10.

Il peut s'agir par exemple d'articles faisant partie d'un ensemble provenant d'une première unité de traitement amont non représentée, et devant être regroupés dans une unité d'empilage 70 en un ensemble 11, avant d'être dirigé dans une deuxième unité de traitement aval.

L'installation comporte au moins un convoyeur en entrée 21 acheminant les articles 10 de l'unité de traitement amont vers un espace de stockage tampon ou espace de stockage temporaire 5.

Par ailleurs, un convoyeur en sortie 22 permet d'acheminer les articles 10 vers l'unité d'empilage 70.

Les convoyeurs en entrée 21 et en sortie 22 font partie d'un ensemble de convoyage 21, 22 destiné à acheminer les articles d'un point à l'autre de l'installation.

Des moyens de manutentions 31, 32 sont prévus pour manipuler les articles 10. Précisément, ces moyens de manutentions 31, 32 comprennent des bras 31, 32 permettant de retirer et/ou placer les articles 10, de et/ou sur le convoyeur en entrée 21, le convoyeur en sortie 22 et l'espace de stockage temporaire 5.

L'espace de stockage temporaire 5 est traversant, et disposé entre le convoyeur en entrée 21 et le convoyeur en sortie 22.

Précisément, l'espace de stockage temporaire 5 présente un côté en entrée 5a orienté vers le convoyeur en entrée 21, et un côté en sortie 5b opposé orienté vers le convoyeur en sortie 22

Par traversant, on entend que tout article placé dans l'espace de stockage temporaire 5 par l'un de ses côté 5a, 5b peut être retiré par son côté opposé 5b, 5a.

Les moyens de manutentions 31, 32 sont disposés de part et d'autres de l'espace de stockage temporaire 5.

Précisément, les moyens de manutention 31, 32 comprennent un bras de manutention en entrée 31 disposés entre le côté en entrée 5a de l'espace de stockage temporaire 5 et le convoyeur en entrée 21.

Ainsi le bras de manutention 31 peut retirer les articles 10 transportés sur le convoyeur en entrée 21 pour les placer dans l'espace de stockage temporaire 5 par son côté en entrée 5a.

Par ailleurs, les moyens de manutention 31, 32 comprennent un bras de manutention en sortie 32 disposés entre le côté en sortie 5b de l'espace de stockage temporaire 5 et le convoyeur en sortie 22.

Ainsi le bras de manutention 32 peut retirer ou déstocker les articles 10 stockés dans l'espace de stockage temporaire 5 par sont côté en sortie 5b, pour les placer sur le convoyeur en entrée 21 en vue de leur acheminement vers l'amont de l'installation.

Dans la variante de la figure 3, l'ensemble de convoyage de l'installation comprend plusieurs convoyeurs en entrée 21, 211 et plusieurs convoyeurs en sortie 221, 22.

L'installation dans cette variante présente une capacité de traitement plus importante.

Dans cette configuration, l'installation comporte plusieurs bras de manutentions en entrée 31 et plusieurs bras de manutention en sortie 32.

Chaque bras de manutention en entrée 31 est alimenté par un convoyeur en entrée 211 dédié, et chaque convoyeur en entrée 211 dédié est lui-même alimenté par le convoyeur en entrée principal 21, via des moyens de déviation 212, transportant les articles 10 provenant de la première unité de traitement.

De même, en amont de l'espace de stockage temporaire 5, chaque bras de manutention en sortie 32 alimente un convoyeur en sortie dédié 221. Chacun de ces convoyeurs en sortie dédiés 221 alimentent finalement un convoyeur en sortie principal 22 qui mène à l'unité d'empilage 70 précédemment décrite.

Cette configuration présente l'avantage de s'adapter à la cadence de production en répartissant la charge sur les différents bras de manutention en entrée et en sortie 31, 32.

Par exemple, on peut prévoir d'envoyer un article 10 sur trois vers chaque bras de manutention en entrée 31, à l'aide des moyens de déviation 212 tel qu'un convoyeur perpendiculaire 212 ou un convoyeur de type flip flap.

Dans ce mode réalisation, les convoyeurs 221 de sortie peuvent être superposés et chaque convoyeur 221 dirige alors les articles vers un convoyeur de type flip flap 23 de tri unique. Le flip flap 23 change de position pour prendre les panneaux en attente sur les trois convoyeurs 221 dans l'ordre désiré. Cette solution permet de supprimer tout lien entre le cycle des moyens de manutention 31, 32 et le temps de convoyage. En sortie de flip flap 23, une unité d'empilage 70 constitue les ensembles 11 ou piles dans une ou plusieurs zones d'empilage. Le convoyeur de type flip flap 23 joue alors le rôle de convoyeur en sortie 23. Alternativement, un convoyeur en sortie distinct 22 fait la jonction entre le convoyeur de type flip flap et l'unité d'empliage 70.

L'espace de stockage temporaire 5 est prévu pour stocker les articles 10 de façon verticale, en particulier quand ces articles 10 sont de type panneau.

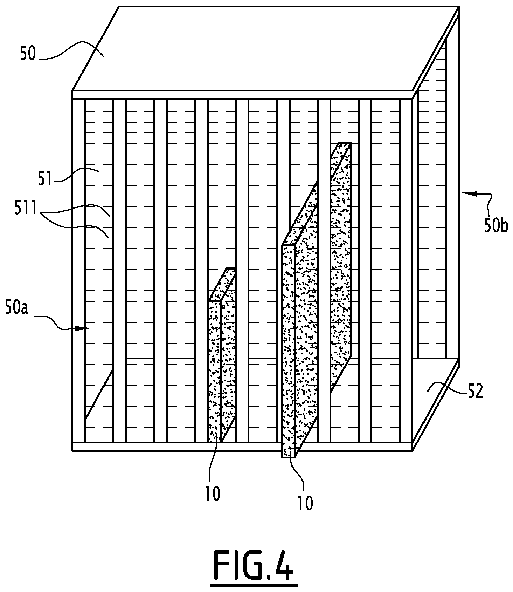

Dans l'exemple de la figure 4, plusieurs emplacement de stockage 51 verticaux sont prévus dans l'espace de stockage 5 pour recevoir les articles 10.

Pour permettre, une optimisation de l'espace de stockage des articles 10 dans cet espace de stockage temporaire 5, les articles 10 sont stockés verticalement dans des unités de stockage 50 regroupant chacune des emplacements de stockage 51, et maintenus entre des brosses de maintien 511.

La plaque support inférieure 52 est également couverte de brosses ou de plaques de nylon (non représentées), pour protéger les chants des articles 10 tout en acceptant d'éventuelles excroissances sur ces articles 10 comme des tourillons ou de la quincaillerie. Cette solution évite tout risque de dégradation.

L'utilisation de brosses 511 n'est pas limitative et tout autre moyen ou matériau peut être utilisé dans le but de maintenir les articles verticalement tout en les protégeant.

L'espace de stockage temporaire 5 peut comprendre plusieurs unités de stockage 50, éventuellement de dimensions différentes pour augmenter la compatibilité avec des articles 10 de dimensions différentes.

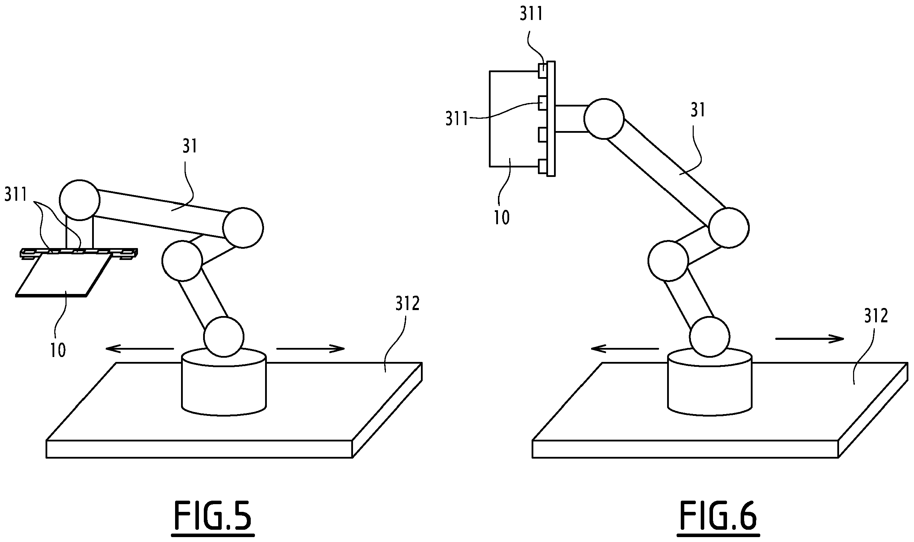

Les bras de manutention 31, 32 sont de préférence des bras articulés robotisés, et motorisés, par exemple sur des rails 312 parallèles à l'espace de stockage temporaire 5, tel que représenté pour le bras de manutention 31 sur les figures 5 et 6, en sorte de permettre leur déplacement.

Ceci augmente la zone d'action des bras de manutention 31, 32, en facilitant l'accès à un espace de stockage temporaire 5 de dimension étendue.

Les bras de manutention 31, 32 sont équipés de moyens de préhension qui leur permettent d'une part de saisir les articles 10 sur l'un des flancs de ces articles 10, et d'autre part de les faire pivoter pour les placer dans ou l'espace de stockage temporaire 5 ou sur un des convoyeurs en sortie 22, 221.

Ainsi, dans l'exemple représenté aux figures 5 et 6 qui concerne un bras de manutention en entrée 31, celui-ci est équipé de moyens de préhension 311 sous la forme de pinces 311, telles que des pinces pneumatiques à mors parallèles revêtues d'une matière antidérapante et qui protège les articles 10 de toute dégradation.

Ces pinces 311 permettent de saisir les articles 10 de manière efficace, mais surtout garantissent une préhension efficace même lorsque le bras de manutention 31 fait passer un article 10 d'une position horizontal à une position verticale (respectivement figures 5 et 6) afin de le retirer d'un convoyeur en entrée 21, 211 pour le placer dans un emplacement 511 d'une unité de stockage 50 de l'espace de stockage temporaire 5.

Les mêmes considérations s'appliquent aux bras de manutention en sortie 32. Ainsi, en sortie, ces bras de manutention 32 sont également équipés de moyens de préhension tels que des pinces. Il peut s'agir cette fois de pinces déportées constituées d'un mors fixe et d'un mors mobile qui permettent le passage entre deux articles 10 dans l'espace de stockage temporaire 5. Les mors sont revêtus d'une matière antidérapante. Les articles 10 sont pris de préférence un par un.

Là encore, les pinces permettent de saisir les articles 10 de manière efficace, et garantissent une préhension efficace même lorsque le bras de manutention 32 fait passer un article 10 d'une position verticale à une position horizontale (respectivement figures 6 et 5 par analogie) afin de le retirer d'un emplacement 511 d'une unité de stockage 50 de l'espace de stockage temporaire 5, pour le placer sur un convoyeur en sortie 22, 221.

Les moyens de préhension équipant les bras de manutention 31, 32, peuvent être équipés de capteurs et de détecteurs afin d'assurer la prise des articles 10.

Ainsi, selon l'invention, les articles 10 arrivant par un des convoyeurs en entrée 21, 211 sont insérés par l'intermédiaire d'un des bras de manutention en entrée 31 dans les emplacements 51 disponibles dans l'une des unités de stockage 50 de l'espace de stockage temporaire 5 traversant.

A l'entrée de cet espace de stockage temporaire 5, le ou les bras de manutention en entrée 31 stockent les articles 10 dans l'ordre de leur arrivée. Les moyens de manutention en entrée 31 remplissent donc l'espace de stockage temporaire 5 au fur et à mesure que les articles 10 sont produits et acheminés par les convoyeurs en entrée 21, 211.

L'espace de stockage temporaire 5 est dimensionné pour accueillir une quantité suffisante d'articles 10 afin de ne pas perturber la production amont.

Lorsque tous les articles 10 d'un ensemble 11 ont été produits et rangés dans l'espace de stockage temporaire 5, le ou les bras de manutention 32 récupèrent l'ensemble des articles 10 dans l'ordre inverse de l'empilage et les positionnent sur l'un des convoyeurs en sortie 22, 221 qui les transporte vers l'unité d'empilage 70. Celle-ci finalise les ensembles 11 avant qu'ils ne soient envoyés dans une nouvelle unité de traitement, telle qu'une unité de peinture, de finition, de montage, d'expédition.

Le déstockage des articles 10 de l'espace de stockage temporaire 5 est donc réalisé de manière asynchrone par rapport au stockage.

La sortie des articles 10 de l'espace de stockage temporaire 5 libère des emplacements verticaux 51 qui sont à nouveaux disponibles immédiatement pour le ou les bras de manutention en entrée 31.

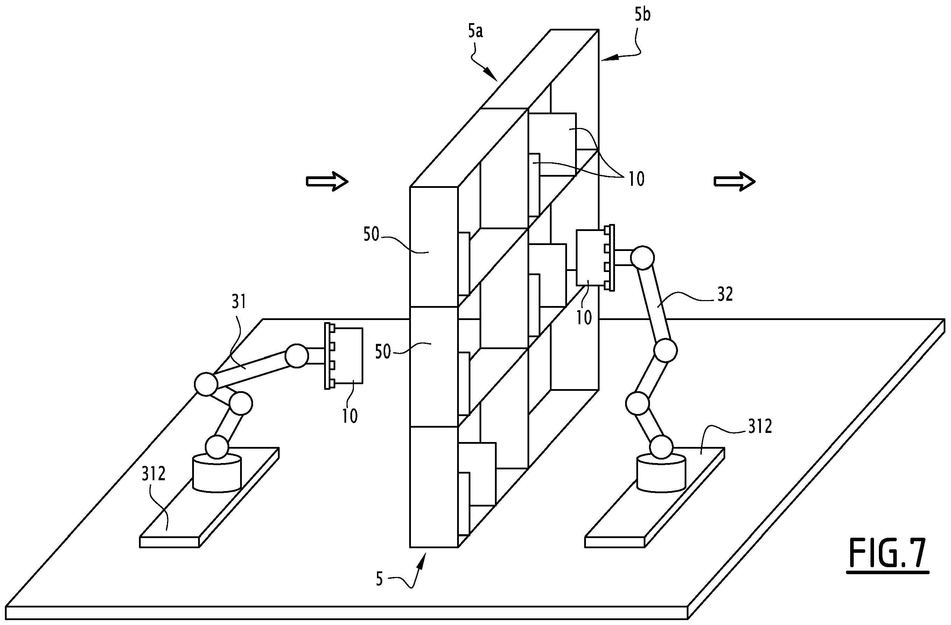

Ce procédé est représenté schématiquement sur la figure 7 sur laquelle des flèches représentent la direction du flux traversant d'article 10, et sur laquelle ne sont pas représentés les convoyeurs en entrée et en sortie pour simplifier.

L'installation est par ailleurs munie de moyens de contrôle et de commande, non représentés, qui pilotent l'ensemble du procédé. Ces moyens sont de préférence interfacés avec le système de contrôle de la production en amont.

## Revendications

1. Installation de gestion d'un flux d'articles (10), notamment dans une chaine de fabrication d'articles (10) plats, tels que des panneaux, des plaques, des matelas, lesdits articles (10) présentant au moins un flanc, ladite installation comprenant un ensemble de convoyage ((21, 211, 212), (22, 221, 23)) comportant au moins un convoyeur en entrée (21, 211, 212) et au moins un convoyeur en sortie (22, 221, 23), un espace de stockage temporaire (5) des articles (10) traversant avec un côté en entrée (5a) et un côté en sortie (5b), l'espace de stockage temporaire (5) disposant d'une pluralité d'emplacements de stockage (51) verticaux aptes à recevoir verticalement les articles (10), et étant disposé de sorte que le côté en entrée (5a) soit orienté vers le convoyeur en entrée (21, 211, 212) et le côté en sortie (5b) soit orienté vers le convoyeur en sortie (22, 221, 23), ladite installation comprenant également des moyens de manutention (31, 32) aptes à placer un article (10) sur, ou à retirer un article (10) de, l'ensemble de convoyage ((21, 211, 212), (22, 221, 23)) et l'espace de stockage temporaire (5), les moyens de manutention (31 et 32) étant disposés de part et d'autre de l'espace de stockage temporaire (5), en sorte de permettre le stockage temporaire des articles (10) en provenance du convoyeur en entrée (21, 211, 212) par le côté en entrée (5a) puis leur déstockage vers le convoyeur en sortie (22, 221, 23) par le côté en sortie (5b),
**caractérisée en ce que** les moyens de manutention (31, 32) comprennent au moins un bras de manutention en entrée (31) disposé entre le convoyeur en entrée (21, 211, 212) et l'espace de stockage temporaire (5) et apte à retirer au moins un article (10) du convoyeur en entrée (21, 211, 212) et à le placer dans l'espace de stockage temporaire (5) par pivotement de cet article (10) entre sa position sur le convoyeurs en entrée (21, 211, 212) et sa position dans l'espace de stockage temporaire (5), et au moins un bras de manutention en sortie (32) disposé entre l'espace de stockage temporaire (5) et le convoyeur en sortie (22, 221, 23) et apte à retirer au moins un article (10) de l'espace de stockage temporaire (5), et à le placer sur le convoyeur en sortie (22, 221, 23), par pivotement de cet article (10) entre sa position dans l'espace de stockage temporaire (5) et sa position sur le convoyeur en sortie (22, 221, 23), et **en ce que** lesdits bras de manutention (31, 32) sont des robots équipés de moyens de préhension (311) des articles (10) aptes à faire pivoter les articles (10) en sorte de les placer verticalement dans l'espace de stockage temporaire (5), lesdits moyens de préhension (311) étant aptes à saisir les articles (10) sur ledit flanc.

2. Installation selon la revendication 1, **caractérisée en ce que** les moyens de manutention (31, 32) comprennent au moins deux bras de manutention en entrée (31) et/ou au moins deux bras de manutention en sortie (32).

3. Installation selon la revendication 2, **caractérisée en ce que** l'ensemble de convoyage ((21, 211, 212), (22, 221, 23)) comprend au moins deux convoyeurs en entrée (211) et **en ce que** chaque bras de manutention en entrée (31) est alimenté par un convoyeur en entrée (211) dédié, en sorte de permettre d'abaisser les délais de traitement des articles (10).

4. Installation selon l'une quelconque des revendications 2 et 3, **caractérisé en ce que** l'ensemble de convoyage ((21, 211, 212), (22, 221, 23)) comprend au moins deux convoyeurs en sortie (221), et **en ce que** chaque bras de manutention en sortie (32) alimente un convoyeur en sortie (221) dédié, en sorte de permettre de paralléliser la sortie de plusieurs articles (10).

5. Installation selon l'une quelconque des revendications 1 à 4, **caractérisée en ce que** les moyens de manutention (31, 32) sont motorisés pour leur déplacement, en sorte de faciliter l'accès plus étendu à l'espace de stockage temporaire (5).

6. Procédé de gestion d'un flux d'articles (10) dans une installation, notamment dans une chaine de fabrication d'articles (10) plats, tels que des panneaux, des plaques, des matelas, lesdits articles (10) présentant au moins un flanc, ledit procédé comprenant les étapes suivantes :
- convoyage du flux continu d'articles (10) sur au moins un convoyeur en entrée (21, 211, 212),
- retrait des articles (10) du ou des convoyeurs en entrée (21, 211, 212), et placement vertical de ces articles (10) dans une pluralité d'emplacements de stockage (51) verticaux d'un espace de stockage temporaire (5) traversant présentant un côté en entrée (5a) et un côté en sortie (5b), par son côté en entrée, par l'intermédiaire de moyens de manutention (31, 32),
- retrait asynchrone des articles (10) de l'espace de stockage temporaire (5) traversant par son côté en sortie (5b), et placement de ces articles (10) sur au moins un convoyeur en sortie (22, 221, 23), par l'intermédiaire des moyens de manutention (31, 32),
**caractérisé en ce que**, les moyens de manutention (31, 32) comprenant au moins un bras de manutention en entrée (31) disposé entre le convoyeur en entrée (21, 211, 212) et l'espace de stockage temporaire (5), et au moins un bras de manutention en sortie (32) disposé entre l'espace de stockage temporaire (5) et le convoyeur en sortie (22, 221, 23), le retrait des articles (10) du ou des convoyeurs en entrée (21, 211, 212) et leur placement dans l'espace de stockage temporaire (5) traversant est réalisé par le bras de manutention en entrée (31) par pivotement de ces articles (10) entre leur position sur le ou les convoyeurs en entrée (21, 211, 212) et leur position dans l'espace de stockage temporaire (5), et le retrait asynchrone des articles (10) de l'espace de stockage temporaire (5) et leur placement sur le convoyeur en sortie (22, 221, 23) est réalisé par le bras de manutention en sortie (32) par pivotement de ces articles (10) entre leur position dans l'espace de stockage temporaire (5) et leur position sur le ou les convoyeurs en sortie (22, 221, 23), et **en ce que** lesdits bras de manutention (31, 32) sont des robots équipés de moyens de préhension (311) des articles (10) aptes à faire pivoter les articles (10) en sorte de les placer verticalement, dans l'espace de stockage temporaire (5), lesdits moyens de préhension (311) étant aptes à saisir les articles (10) sur ledit flanc.

## Patentansprüche

1. Vorrichtung zur Verwaltung eines Stroms an Produkten (10), insbesondere in einer Fertigungsstraße für flache Produkte (10), wie zum Beispiel Tafeln, Platten, Matratzen, wobei die Produkte (10) zumindest eine Seitenfläche aufweisen, wobei besagte Vorrichtung eine Fördereinheit ((21, 211, 212), (22, 221, 23)) umfasst, die zumindest einen Förderer am Eingang (21, 211, 212) und zumindest einem Förderer am Ausgang (22, 221, 23) und einen durchgängigen Zwischenlagerbereich (5) für Produkte (10) mit einer Eingangsseite (5a) und einer Ausgangsseite (5b) umfasst, wobei der Zwischenlagerbereich (5) über eine Vielzahl an senkrechten Lagerstellen (51) zur senkrechten Aufnahme der Produkte (10) verfügt, und so angeordnet ist, dass die Eingangsseite (5a) zum Eingangsförderer (21, 211, 212) und die Ausgangsseite (5b) zum Ausgangsförderer (22, 221, 23) zeigt, wobei die Vorrichtung darüber hinaus Beförderungsmittel (31, 32) umfasst, die in der Lage sind, ein Produkt (10) auf die Fördereinheit ((21, 211, 212), (22, 221, 23)) und den Zwischenlagerbereich (5) zu platzieren oder davon zu entnehmen, wobei die Beförderungsmittel (31 und 32) zu beiden Seiten des Zwischenlagerbereichs (5) angeordnet sind, so dass die Zwischenlagerung der vom Eingangsförderer (21, 211, 212) kommenden Produkte über die Eingangsseite (5a) und deren Entnahme aus dem Lagerbereich zum Ausgangsförderer (22, 221,23) über die Ausgangsseite (5b) möglich ist,
**dadurch gekennzeichnet, dass** die Beförderungsmittel (31, 32) zumindest einen Beförderungsarm am Eingang (31) umfassen, der zwischen dem Eingangsförderer (21, 211, 212) und dem Zwischenlagerbereich (5) angeordnet und in der Lage ist, zumindest ein Produkt (10) vom Eingangsförderer (21, 211, 212) zu entnehmen und durch Schwenkbewegung dieses Produkts (10) zwischen seiner Stellung auf dem Eingangsförderer (21, 211 , 212) und seiner Stellung im Zwischenlagerbereich (5) in den Zwischenlagerbereich (5) zu platzieren, und zumindest einen Beförderungsarm am Ausgang (32), der zwischen dem Zwischenlagerbereich (5) und dem Ausgangsförderer (22, 221, 23) angeordnet ist und der in der Lage ist, zumindest ein Produkt (10) aus dem Zwischenlagerbereich (5) zu entnehmen und durch eine Schwenkbewegung dieses Produkts (10) zwischen seiner Stellung im Zwischenlagerbereich (5) und seiner Stellung auf dem Ausgangsförderer (22, 221, 23) auf den Ausgangsförderer (22, 221, 23) zu platzieren, und dadurch, dass die Beförderungsarme (31, 32) Roboter sind, die mit Mitteln zum Greifen (311) der Produkte (10) ausgestattet sind, die in der Lage sind, die Produkte (10) so zu schwenken, dass sie senkrecht in den Zwischenlagerbereich (5) platziert werden können, wobei die Greifmittel (311) in der Lage sind, die Produkte (10) an der Flanke zu greifen.

2. Vorrichtung nach Anspruch 1, **dadurch gekennzeichnet, dass** die Beförderungsmittel (31, 32) zumindest zwei Beförderungsarme am Eingang (31) und/oder zumindest zwei Beförderungsarme am Ausgang (32) umfassen.

3. Vorrichtung nach Anspruch 2, **dadurch gekennzeichnet, dass** die Fördereinheit ((21,211,212), (22, 221,23)) zumindest zwei Eingangsförderer (211) umfasst, und dadurch, dass jeder Beförderungsarm am Eingang (31) beschickt wird durch einen spezifischen Eingangsförderer (211), sodass die Bearbeitungszeit der Produkte (10) verkürzt wird.

4. Vorrichtung nach einem der Ansprüche 2 und 3, **dadurch gekennzeichnet, dass** die Fördereinheit ((21, 211, 212), (22, 221, 23)) zumindest zwei Ausgangsförderer (221) umfasst, und dadurch, dass jeder Beförderungsarm am Ausgang (32) einen spezifischen Ausgangsförderer (221) beschickt, sodass mehrere Produkte (10) gleichzeitig an den Ausgang gebracht werden können.

5. Vorrichtung nach einem der Ansprüche 1 bis 4, **dadurch gekennzeichnet, dass** die Beförderungsmittel (31, 32) zwecks Verschiebung motorbetrieben sind, sodass der erweiterte Zugang zum Zwischenlagerbereich (5) erleichtert wird.

6. Verfahren zur Verwaltung eines Stroms von Produkten (10) in einer Vorrichtung, insbesondere in einer Fertigungsstraße für flache Produkte (10), wie zum Beispiel Tafeln, Platten, Matratzen, wobei die Produkte (10) mindestens eine Seitenfläche aufweisen, wobei das Verfahren die folgenden Schritte umfasst:
- die kontinuierliche Beförderung eines Stroms an Produkten (10) auf zumindest einem Eingangsförderer (21,211,212),
- die Entnahme von Produkten (10) von dem oder den Eingangsförderern (21, 211, 212) und das senkrechte Platzieren dieser Produkte (10) mithilfe von Beförderungsmitteln (31, 32) in einer Vielzahl von senkrechten Lagerstellen (51) eines durchgängigen Zwischenlagerbereichs (5) mit Eingangsseite (5a) und Ausgangsseite (5b) über seine Eingangsseite,
- die asynchrone Entnahme der Produkte (10) aus dem durchgängigen Zwischenlagerbereich (5) über die Ausgangsseite (5b) und das Platzieren dieser Produkte (10) mithilfe von Beförderungsmitteln (31, 32) auf zumindest einem Ausgangsförderer (22, 221, 23),
**dadurch gekennzeichnet, dass** die Beförderungsmittel (31, 32) zumindest einen Beförderungsarm am Eingang (31) umfassen, der zwischen dem Eingangsförderer (21, 211, 212) und dem Zwischenlagerbereich (5) angeordnet ist, und zumindest einen Beförderungsarm am Ausgang (32), der zwischen dem Zwischenlagerbereich (5) und dem Ausgangsförderer (22, 221, 23) angeordnet ist, wobei die Entnahme der Produkte (10) von dem oder den Eingangsförderern (21, 211, 212) und deren Platzierung im durchgängigen Zwischenlagerbereich (5) mithilfe des Beförderungsarms (31) am Eingangs durch eine Schwenkbewegung dieser Produkte (10) zwischen ihrer Stellung auf dem oder den Eingangsförderern (21, 211, 212) und ihrer Stellung im Zwischenlagerbereich (5) durchgeführt wird, und die asynchrone Entnahme der Produkte (10) aus dem Zwischenlagerbereich (5) und deren Platzierung auf dem Ausgangsförderer (22, 221, 23) mithilfe des Beförderungsarms am Ausgang (32) durch eine Schwenkbewegung dieser Produkte (10) zwischen ihrer Stellung im Zwischenlagerbereich (5) und ihrer Stellung auf dem oder den Ausgangsförderern (22, 221, 23) durchgeführt wird, und dadurch, dass die Beförderungsarme (31, 32) Roboter sind, die mit Mitteln zum Greifen (311) der Produkte (10) ausgestattet sind, die in der Lage sind, die Produkte (10) zu schwenken, um sie senkrecht in den Zwischenlagerbereich (5) zu platzieren, wobei die Greifmittel (311) in der Lage sind, die Produkte (10) an der Seitenfläche zu greifen.

## Claims

1. A facility for managing a stream of articles (10), in particular in a line for manufacturing flat articles (10), such as panels, plates, mattresses, said articles (10) having at least one flank, said facility comprising a conveyor assembly ((21, 211, 212), (22, 221, 23) comprising at least one inlet conveyor (21, 211, 212) and at least one outlet conveyor (22, 221, 23), a through temporary storage space (5) for the articles (10) with an inlet side (5a) and an outlet side (5b), the temporary storage space (5) having a plurality of vertical storage locations (51) adapted to vertically receive the articles (10), and being so arranged that the inlet side (5a) faces the inlet conveyor (21, 211, 212) and the outlet side (5b) faces the outlet conveyor (22, 221, 23), said facility also comprising handling means (31, 32) adapted to place an article (10) on, or remove an article (10) from, the conveying assembly (21, 211, 212), (22, 221, 23) and the temporary storage space (5), the handling means (31 and 32) being arranged on either side of the temporary storage space (5), so as to enable the temporary storage of the articles (10) from the inlet conveyor (21, 211, 212) through the inlet side (5a) and then the destocking thereof to the outlet conveyor (22, 221, 23) through the outlet side (5b),
**characterized in that** the handling means (31, 32) comprise at least one inlet handling arm (31) positioned between the inlet conveyor (21, 211, 212) and the temporary storage space (5) and adapted to remove at least one article (10) from the inlet conveyor (21, 211, 212) and place it in the temporary storage space (5) by pivoting this article (10) between its position on the inlet conveyors (21, 211, 212) and its position in the temporary storage space (5), and at least one outlet handling arm (32) positioned between the temporary storage space (5) and the outlet conveyor (22, 221,23) and adapted to remove at least one article (10) from the temporary storage space (5), and place it on the outlet conveyor (22, 221, 23), by pivoting this article (10) between its position in the temporary storage space (5) and its position on the outlet conveyor (22, 221, 23), and **in that** said handling arms (31, 32) are robots equipped with article gripping means (311) (10) adapted to rotate the articles (10) so as to place them vertically in the temporary storage space (5), said gripping means (311) being adapted to grip the articles (10) on said flank.

2. A facility according to claim 1, **characterized in that** the handling means (31, 32) comprise at least two inlet handling arms (31) and/or at least two outlet handling arms (32).

3. A facility according to claim 2, **characterized in that** the conveyor assembly ((21,211,212), (22,221,23) comprises at least two inlet conveyors (211) and **in that** each inlet conveyor arm (31) is fed by a dedicated inlet conveyor (211), so as to reduce the times for processing the articles (10).

4. A facility according to any one of claims 2 and 3, **characterized in that** the conveyor assembly ((21, 211, 212), (22, 221, 23) comprises at least two outlet conveyors (221), and **in that** each outlet conveyor arm (32) feeds a dedicated outlet conveyor (221), so as to enable the parallel outcoming of several articles (10).

5. A facility according to any one of claims 1 to 4, **characterized in that** the handling means (31, 32) are motorized for their movement, in order to facilitate a larger access to the temporary storage space (5).

6. A method for managing a stream of articles (10) in a facility, in particular in a line for manufacturing flat articles (10), such as panels, plates, mattresses, said articles (10) having at least one flank, said method comprising the following steps:
- conveying the continuous stream of articles (10) on at least one inlet conveyor (21,211,212),
- removing the articles (10) from the inlet conveyor(s) (21, 211, 212), and vertically placing these articles (10) in a plurality of vertical storage locations (51) of a through temporary storage space (5) having an inlet side (5a) and an outlet side (5b), through the inlet side, using the handling means (31, 32),
- asynchronously removing the articles (10) from the through temporary storage space (5) through its outlet side (5b), and placing these articles (10) on at least one outlet conveyor (22, 221, 23), using the handling means (31, 32),
**characterized in that**, the handling means (31, 32) comprising at least one inlet handling arm (31) positioned between the inlet conveyor (21, 211, 212) and the temporary storage space (5), and at least one outlet handling arm (32) positioned between the temporary storage space (5) and the outlet conveyor (22, 221, 23), removing the articles (10) from the inlet conveyor (21, 211, 212) and the placing thereof in the through temporary storage space (5) is achieved by the inlet handling arm (31) by pivoting these articles (10) between their position on the inlet conveyor (s) (21, 211, 212) and their position in the temporary storage space (5), and asynchronously removing the articles (10) from the temporary storage space (5) and the placing thereof on the outlet conveyor (22, 221, 23) is carried out by the outlet handling arm (32) by pivoting these articles (10) between the position thereof in the temporary storage space (5) and the position thereof on the outlet conveyor (s) (22, 221, 23), and **in that** said handling arms (31, 32) are robots equipped with article gripping means (311) (10) capable of rotating the articles (10) so as to place them vertically in the temporary storage space (5), said gripping means (311) being adapted to grip the articles (10) on said flank.
